# EUROPEAN PATENT SPECIFICATION

(11) **EP 2 514 556 B1**
(45) Date of publication and mention of the grant of the patent: **24.02.2016**
(21) Application number: 12165072.5
(22) Date of filing: 20.04.2012
(51) Int. Cl.: B23Q 35/28

(54) **Operating head for processing wood components or the like**
Betriebskopf zur Bearbeitung von Holzteilen oder Ähnlichem
Tête de fonctionnement pour traiter les composants en bois ou similaire

(30) Priority: 21.04.2011 IT BO20110217
(43) Date of publication of application: 24.10.2012
(73) Proprietor: BIESSE S.p.A., Pesaro (IT)
(72) Inventor: Bernardi, Paolo, 47841 Cattolica (IT)
(74) Representative: Bergadano, Mirko

(56) References cited:
- EP-A1- 2 135 706
- EP-A1- 2 392 438
- EP-A2- 2 492 072
- DE-A1- 10 320 082
- DE-U1- 29 907 571

## Description

The present invention relates to an operating head for processing wood components or the like.

The present invention is particularly advantageously applied to a rounding assembly for processing finishing edges of wood components or the like, to which the following description will make explicit reference without therefore losing in generality.

In the field of edgebanding wood components or the like, it is known to provide a rounding assembly comprising a supporting frame; and a first slide, which supports a lateral copy attachment adapted to follow, in use, a profile of a component being processed, and is slidingly coupled to the supporting frame by interposing a first shock absorber device, in order to be moved with respect to said supporting frame as a function of the profile of the component.

The rounding assembly further comprises a second slide, which supports a frontal copy attachment adapted to follow, in use, a profile of a finishing edge applied to the component, is slidingly coupled to the first slide by interposing a second shock absorber device, in order to be moved with respect to said first slide as a function of the profile of the finishing edge, and further supports an electro-spindle provided with a tool-holding spindle adapted to receive and hold a tool.

Since the lateral copy attachment normally comprises a wheel which is rotationally coupled to a support bracket protruding from the first slide so as to allow the wheel to pass over the tool and be arranged in front of said tool, the known rounding assemblies of the above-described type have relatively large dimensions.

Furthermore, the length of the support bracket of the wheel produces relatively high bending forces on the rounding assembly, which may compromise the precision of the processing carried out by the tool, while the weight of the rounding assembly, weighing down on the wheel, only allows relatively hard materials to be processed.

EP-2392438-A (Art.54(3) EPC) discloses an operating head according to the preamble of claim 1.

The object of the present invention is to provide an operating head for processing wood components or the like which is free from the above-described drawbacks and which is simple and cost-effective to be implemented.

According to the present invention, an operating head for processing wood components or the like is provided as claimed in the appended claims.

The present invention will now be described with reference to the accompanying drawings, which show an embodiment thereof by way of non-limiting example, in which:
figure 1 is a first diagrammatic perspective view of a preferred embodiment of the operating head of the present invention;
figure 2 is a second diagrammatic perspective view of the operating head in figure 1; and
figure 3 is a diagrammatic longitudinal section of the operating head in figures 1 and 2.

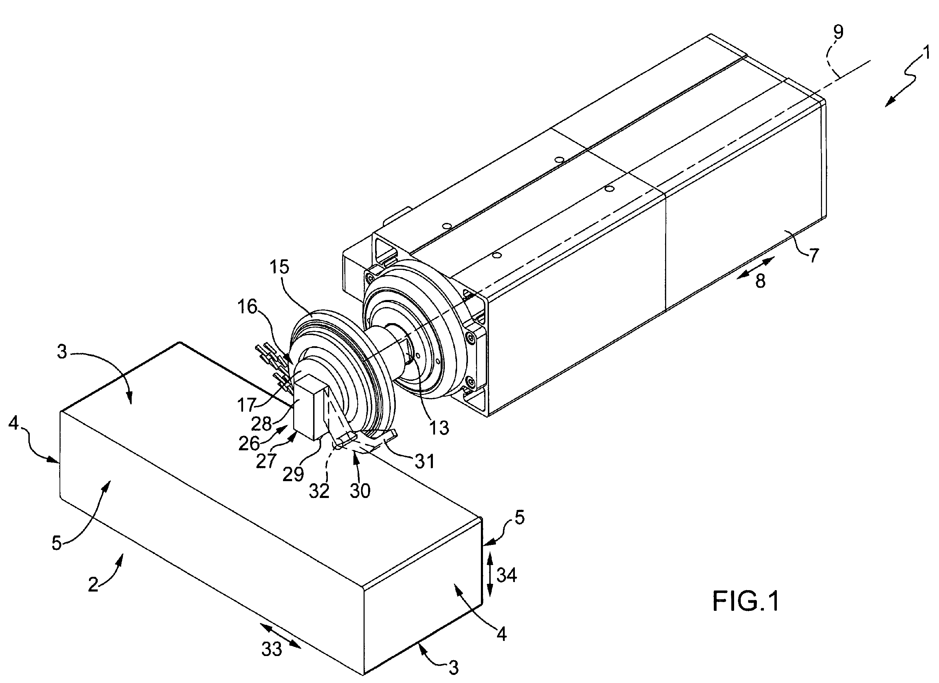

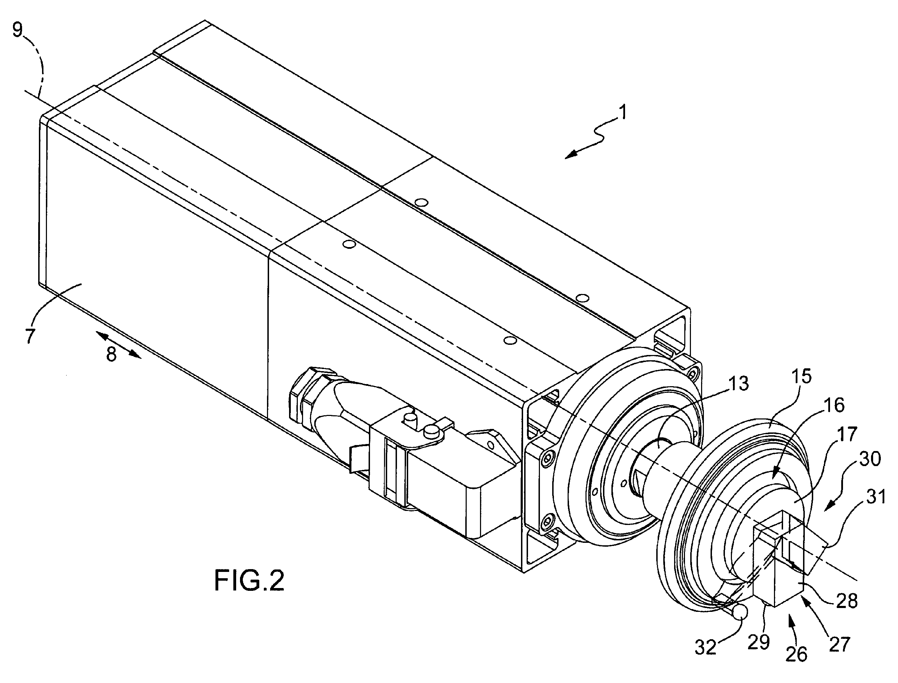

With reference to figures 1 and 2, numeral 1 indicates, as a whole, an operating head for processing wood components 2, each of which has, in this case, a substantially parallelepiped shape with a substantially rectangular section, and is limited by two bigger lateral faces 3 which are parallel to each other, two smaller lateral faces 4 which are parallel to each other and perpendicular to faces 3, and two smaller lateral faces 5 which are parallel to each other and perpendicular to faces 3 and 4, and at least one of which is provided with a finishing edge 6 of the known type.

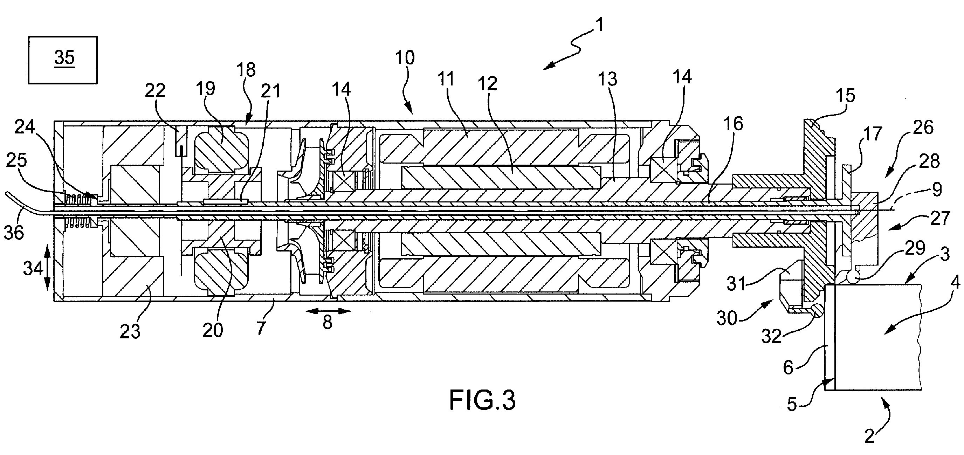

As shown in figure 3, operating head 1 comprises an elongated tubular casing 7, which extends in a direction 8, has a longitudinal axis 9 which is parallel to direction 8, and houses an electric motor 10 therein.

Motor 10 comprises a stator 11 and a rotor 12 splined on a tubular output shaft 13, which is rotationally coupled to casing 7 by interposing a pair of rolling bearings 14 so as to rotate, with respect to casing 7, around axis 9, and has a free end, which axially protrudes towards the outside of casing 7, and carries a milling tool 15 of the known type splined thereon.

Operating head 1 further comprises a tubular rod 16, which is fitted within shaft 13 coaxially to axis 9, and extends through tool 15 so as to have a free end 17 protruding in front of said tool 15.

Rod 16 is rotationally coupled to shaft 13 so as to rotate, with respect to shaft 13, around axis 9 under the thrust of the electric motor 18 housed within casing 7 and comprising a stator 19 and a rotor 20 which are coaxial to each other and to said axis 9.

Rotor 20 is coupled to rod 16 by means of a grooved-profile coupling 21 adapted to allow rod 16 to perform, with respect to rotor 20 and therefore shaft 13, rectilinear movements in direction 8.

The operating head 1 further comprises a detecting device for detecting the angular position of rod 16 around axis 9, in this case an encoder 22 fitted within casing 7, so as to allow the operation of motor 18 to be selectively controlled; and a detecting device 23 housed within casing 7 for detecting the axial position of rod 16 along axis 9.

Rod 16 is moved, and normally kept, in an extracted position, in which rod 16 is arranged in contact with an end stop element 24 obtained in the device 23, by a cylindrical spring 25, which is fitted on rod 16 coaxially to axis 9, and is interposed between casing 7 and the rod 16 itself.

The free end 17 supports a copy attachment device 26 provided with a lateral copy attachment 27, in this case an electronic copy attachment comprising a support block 28 fixed to the free end 17 and a copy attachment member 29, which is arranged, in use, in contact with the faces 3 and/or 4 of component 2 being processed, and is movable, with respect to block 28, transversely to axis 9 as a function of a profile of said faces 3 and/or 4.

Device 26 further comprises a frontal copy attachment 30 comprising a support bracket 31, which extends around tool 15 from block 28, and has a free end 32 which is arranged, in use, in contact with a bigger face of edge 6.

The operation of the operating head 1 will now be described with reference to figures 1 and 3 and starting from when tool 15 is arranged in contact with an end of an upper corner of edge 6, the copy attachment member 29 is arranged in contact with upper face 3, and the free end 32 is arranged in contact with the bigger face of edge 6 with a force such as to disengage rod 16 from the end stop element 24.

Following the movement of the operating head 1 along component 2 in a horizontal direction 33 perpendicular to direction 8, tool 15 processes the upper corner of edge 6, the copy attachment member 29 moves along a profile of the upper face 3, and the free end 32 moves along a profile of the bigger face of edge 6.

The copy attachment member 29 moves, with respect to block 28, in a vertical direction 34 orthogonal to the faces 3 and to the directions 8 and 33 as a function of the profile of the upper face 3 generating an electric signal, which is transmitted to an electronic control unit 35 by means of an electric cable 36 inserted within rod 16 and connected to the copy attachment 27, and allows the control unit 35 to control the movement of casing 7 in a direction 34 as a function of the profile of said upper face 3.

Similarly, rod 16 moves axially, with respect to shaft 13 and under the thrust of the copy attachment 30 and spring 25, in the direction 8 as a function of the profile of the bigger face of edge 6 so as to allow detecting device 23 to generate an electric signal, which is transmitted to the control unit 35, and allows the control unit 35 to control the movement of casing 7 in the direction 8 as a function of the profile of the bigger face of edge 6.

Once the processing of the upper corner of edge 6 has been completed, rod 16 is rotated by 90° around axis 9 so as to arrange the copy attachment member 29 in contact with one of the faces 4 of component 2, and the operating head 1 is moved along component 2 in the direction 34 so as to allow the tool 15 to process a first lateral corner of edge 6, the member 29 to move, with respect to block 28, in the direction 33 as a function of the profile of said face 4, the rod 16 to move, under the thrust of the copy attachment 30 and spring 25, in the direction 8 as a function of the profile of the bigger face of edge 6, and the control unit 35 to selectively control the movements of casing 7 in the direction 8 in response to the signals from the device 23 and in the direction 33 in response to the signals from the copy attachment 27.

When edge 6 has a rounded profile or a different geometry, the signals from the device 23 and the copy attachment 27 are processed by the control unit 35 so as to combine the movements of casing 7 in the directions 8 and/or 33 and/or 34.

The above-described operating sequences will obviously be repeated so as to allow tool 15 to also process a lower corner and a second lateral corner of edge 6.

According to a variation (not shown), the copy attachment device 26 is eliminated and replaced, for example, by a deflector for containing shavings and/or swarf produced when processing the components.

According to a further variation (not shown), the lateral copy attachment 27 and the frontal copy attachment 30 are replaced by mechanical copy attachments, such as discs with rolling bearings.

## Claims

1. An operating head for processing wood components (2) or alike comprising a support casing (7); a first electric motor (10), which is housed inside the support casing (7), and presents a first output shaft (13), which is tubular and is mounted so as to rotate around its own longitudinal axis (9); a processing tool and/or aggregate (15), which is angularly locked on a first free end of the first output shaft (13); a support rod (16), which extends through the first output shaft (13) coaxial to said longitudinal axis (9), is coupled in a rotary manner to the first output shaft (13), and presents a second free end (17) protruding towards the outside of the first output shaft (13); and at least one auxiliary member (26), which is fitted to said second free end (17), so as to be oriented by the support rod (16) around said longitudinal axis (9); and **characterised in that** the support rod (16) is coupled in an axially sliding manner to the first output shaft (13).

2. An operating head according to claim 1 and comprising, furthermore, a first detecting device (22) for detecting the angular position of the support rod (16) around said longitudinal axis (9).

3. An operating head according to claim 1 or 2 and comprising, furthermore, a second detecting device (23) for detecting an axial position of the support rod (16) along said longitudinal axis (9).

4. An operating head according to claim 3, wherein the support casing (7) is mobile parallel to said longitudinal axis (9) in response to a signal of the second detecting device (23).

5. An operating head according to any of the previous claims, wherein the auxiliary member (26) is a deflector for the containment of shavings and/or swarf produced during the processing of the components (2).

6. An operating head according to any of the claims from 1 to 4, wherein the auxiliary member (26) comprises a first copy attachment (29), which is suited to follow, in use, a profile of at least one face (3, 4) of a component (2) being processed, and is mobile transverse to said longitudinal axis (9) as a function of the profile of the face (3, 4) itself.

7. An operating head according to claim 6, wherein the auxiliary member (26) comprises, furthermore, a second copy attachment (30), which is suited to follow, in use, a profile of a finishing edge (6) applied on the component (2) being processed, and is mobile parallel to said longitudinal axis (9) as a function of the profile of said finishing edge (6).

8. An operating head according to claim 7, wherein the support casing (7) is mobile in a first and/or a second and/or a third direction (8, 33, 34), which are orthogonal to each other, in response to a signal of the first copy attachment (29) and/or of the second copy attachment (30).

9. An operating head according to claim 7 or 8, wherein the second copy attachment (30) is coupled in an axially fixed manner to the support rod (16) and the support rod (16) is coupled in an axially sliding manner to the first output shaft (13).

10. An operating head according to claim 9 and comprising, furthermore, pushing means (25) interposed between the support casing (7) and the support rod (16), so as to keep the second copy attachment (30) in contact with the finishing edge (6).

11. An operating head according to any of the previous claims and comprising, furthermore, a second electric motor (18), which is housed inside the support casing (7), so as to move the support rod (16) around said longitudinal axis (9).

12. An operating head according to any of the previous claims, wherein the support rod (16) is tubular and houses, in its inside, an electric cable (36) connected to said auxiliary member (26).

## Patentansprüche

1. Ein Bearbeitungskopf zum Bearbeiten von Holzkomponenten (2) oder dergleichen umfassend ein Traggehäuse (7); einen ersten elektrischen Motor (10), der innerhalb des Traggehäuses (7) aufgenommen ist und eine erste Abtriebswelle (13) aufweist, die röhrenförmig ist und derart angebracht ist, dass sie über ihrer eigenen Längsachse (9) rotiert; ein Bearbeitungswerkzeug und/oder -aggregat (15), welches auf einem ersten freien Ende der ersten Abtriebswelle (13) drehfest befestigt ist; eine Tragstange (16), die sich durch die erste Abtriebswelle (13) koaxial zu der genannten Längsachse (9) erstreckt, an der ersten Abtriebswelle (13) drehgekoppelt angeschlossen ist und ein zweites freies Ende (17) aufweist, das sich in Richtung der Außenseite der ersten Abtriebswelle (13) erstreckt; und wenigstens ein Hilfselement (26), das an das genannte zweite freie Ende (17) gefügt ist, sodass es durch die Tragstange (16) über der genannten Längsachse (9) ausgerichtet wird; und **dadurch gekennzeichnet, dass** die Tragstange (16) axial gleitend an der ersten Abtriebswelle (13) angeschlossen ist.

2. Ein Bearbeitungskopf gemäß Anspruch 1 und ferner umfassend eine erste Erfassungseinrichtung (22) zum Erfassen der Winkelposition der Tragstange (16) über der genannten Längsachse (9).

3. Ein Bearbeitungskopf gemäß Anspruch 1 oder 2 und ferner umfassend eine zweite Erfassungseinrichtung (23) zum Erfassen einer axialen Position der Tragstange (16) entlang der genannten Längsachse (9).

4. Ein Bearbeitungskopf gemäß Anspruch 3, wobei das Traggehäuse (7) parallel zu der genannten Längsachse (9) in Abhängigkeit eines Signals der zweiten Erfassungseinrichtung (23) beweglich ist.

5. Ein Bearbeitungskopf gemäß einem der vorhergehenden Ansprüche, wobei das Hilfselement (26) ein Abweiser für die Eingrenzung von Spänen und/oder Staub, die/der während der Bearbeitung der Komponenten (2) erzeugt wird, ist.

6. Ein Bearbeitungskopf gemäß einem der Ansprüche 1 bis 4, wobei das Hilfselement (26) einen ersten Duplikat-Teil (29) umfasst, der geeignet ist, im Gebrauch einem Profil wenigstens einer Fläche (3, 4) einer Komponente (2), die bearbeitet wird, zu folgen, und der quer zu der genannten Längsachse (9) als eine Funktion des Profils der Fläche (3, 4) selbst beweglich ist.

7. Ein Bearbeitungskopf gemäß Anspruch 6, wobei das Hilfselement (26) ferner einen zweiten Duplikat-Teil (30) umfasst, der geeignet ist, im Gebrauch einem Profil einer Finishing-Kante (6) zu folgen, die auf der Komponente (2), die bearbeitet wird, aufgebracht wird, und welcher parallel zu der genannten Längsachse (9) als eine Funktion des Profils der genannten Finishing-Kante (6) beweglich ist.

8. Ein Bearbeitungskopf gemäß Anspruch 7, wobei das Traggehäuse (7) beweglich in einer ersten und/oder einer zweiten und/oder einer dritten Richtung (8, 33, 34) ist, welche senkrecht zueinander sind, in Abhängigkeit eines Signals des ersten Duplikat-Teils (29) und/oder des zweiten Duplikat-Teils (30).

9. Ein Bearbeitungskopf gemäß Anspruch 7 oder 8, wobei der zweite Duplikat-Teil (30) axial feststehend an der Tragstange (16) angeschlossen ist und die Tragstange (16) axial gleitend an der ersten Abtriebswelle (13) angeschlossen ist.

10. Ein Bearbeitungskopf gemäß Anspruch 9 und ferner umfassend ein Drückelement (25), welches zwischen das Traggehäuse (7) und die Tragstange (16) zwischengesetzt ist, sodass der zweite Duplikat-Teil (30) im Kontakt mit der Finishing-Kante (6) gehalten wird.

11. Ein Bearbeitungskopf gemäß einem der vorhergehenden Ansprüche und ferner umfassend einen zweiten elektrischen Motor (18), der innerhalb des Traggehäuses (7) aufgenommen ist, derart, dass er die Tragstange (16) über der genannten Längsachse (9) bewegt.

12. Ein Bearbeitungskopf gemäß einem der vorhergehenden Ansprüche, wobei die Tragstange (16) röhrenförmig ist und auf ihrer Innenseite ein elektrisches Kabel (36) beherbergt, das an dem genannten Hilfselement (26) angeschlossen ist.

## Revendications

1. Tête de fonctionnement pour le traitement des composants en bois (2) ou similaires comprenant un boîtier de support (7) ; un premier moteur électrique (10) qui est logé à l'intérieur du boîtier de support (7) et présente un premier arbre de sortie (13) qui est tubulaire et est monté afin de tourner autour de son propre axe longitudinal (9) ; un outil et/ou un agrégat de traitement(15) qui est verrouillé de manière angulaire sur une première extrémité libre du premier arbre de sortie (13) ; une tige de support (16) qui s'étend à travers le premier arbre de sortie (13) de manière coaxiale par rapport audit axe longitudinal (9), est couplée en rotation au premier arbre de sortie (13), et présente une seconde extrémité libre (17) faisant saillie vers l'extérieur du premier arbre de sortie (13) ; et au moins un élément auxiliaire (26) qui est monté sur ladite seconde extrémité libre (17) afin d'être orienté par la tige de support (16) autour dudit axe longitudinal (9) ; et **caractérisée en ce que** la tige de support (16) est couplée d'une manière axialement coulissante au premier arbre de sortie (13).

2. Tête de fonctionnement selon la revendication 1 et comprenant en outre, un premier dispositif de détection (22) pour détecter la position angulaire de la tige de support (16) autour dudit axe longitudinal (9).

3. Tête de fonctionnement selon la revendication 1 ou 2 et comprenant, en outre, un deuxième dispositif de détection (23) pour détecter une position axiale de la tige de support (16) le long dudit axe longitudinal (9).

4. Tête de fonctionnement selon la revendication 3, dans laquelle le boîtier de support (7) est mobile parallèlement audit axe longitudinal (9) en réponse à un signal du second dispositif de détection (23).

5. Tête de fonctionnement selon l'une quelconque des revendications précédentes, dans laquelle l'élément auxiliaire (26) est un déflecteur pour le confinement des copeaux et/ou des ébarbures produits pendant le traitement des composants (2).

6. Tête de fonctionnement selon l'une quelconque des revendications 1 à 4, dans laquelle l'élément auxiliaire (26) comprend un premier copieur (29) qui est approprié pour suivre, à l'usage, un profil d'au moins une face (3, 4) d'un composant (2) qui est traité, et est mobile transversalement par rapport audit axe longitudinal (9) en fonction du profil de la face (3, 4) elle-même.

7. Tête de fonctionnement selon la revendication 6, dans laquelle l'élément auxiliaire (26) comprend, en outre, un deuxième copieur (30) qui est approprié pour suivre, à l'usage, un profil d'un bord de finition (6) appliqué sur le composant (2) qui est traité et est mobile parallèlement audit axe longitudinal (9) en fonction du profil dudit bord de finition (6).

8. Tête de fonctionnement selon la revendication 7, dans laquelle le boîtier de support (7) est mobile dans une première et/ou une deuxième et/ou une troisième direction (8, 33, 34) qui sont orthogonales entre elles, en réponse à un signal du premier copieur (29) et/ou du deuxième copieur (30).

9. Tête de fonctionnement selon la revendication 7 ou 8, dans laquelle le deuxième copieur (30) est couplé d'une manière axialement fixe, à la tige de support (16) et la tige de support (16) est couplée d'une manière axialement coulissante au premier arbre de sortie (13).

10. Tête de fonctionnement selon la revendication 9 et comprenant en outre des moyens de poussée (25) intercalés entre le boîtier de support (7) et la tige de support (16) afin de maintenir le second copieur (30) en contact avec le bord de finition (6).

11. Tête de fonctionnement selon l'une quelconque des revendications précédentes et comprenant, en outre, un second moteur électrique (18) qui est logé à l'intérieur du boîtier de support (7), afin de déplacer la tige de support (16) autour dudit axe longitudinal (9).

12. Tête de fonctionnement selon l'une quelconque des revendications précédentes, dans laquelle la tige de support (16) est tubulaire et loge, dans son intérieur, un câble électrique (36) raccordé audit élément auxiliaire (26).
